# FASCICULE DE BREVET EUROPEEN

(11) **EP 0 962 287 B1**
(45) Date de publication et mention de la délivrance du brevet: **27.03.2002**
(21) Numéro de dépôt: 99401273.0
(22) Date de dépôt: 27.05.1999
(51) Int. Cl.: B25B 23/00

(54) **"Outil d'entrainement muni d'un mécanisme de verrouillage"**
Mit einer Verriegelungsvorrichtung versehenes Antriebswerkzeug
Driving device with locking mechanism

(30) Priorité: 04.06.1998 FR 9807038
(43) Date de publication de la demande: 08.12.1999
(73) Titulaire: FACOM, 91420 Morangis Cédex (FR)
(72) Inventeur: Bonniot Frank, 58320 POUGUES LES EAUX (FR)
(74) Mandataire: Jacobson, Claude

(56) Documents cités:
- EP-A- 0 755 757
- US-A- 2 436 336
- US-A- 4 614 457
- US-A- 4 733 584
- US-A- 4 936 701
- US-A- 5 289 745
- US-A- 5 433 548

## Description

La présente invention est relative à un outil d'entraînement d'un élément rotatif, du type décrit dans le préambule de la revendication 1.

L'invention s'applique en particulier aux outils articulés tels que les cardans, servant à entraîner en rotation une douille de vissage/dévissage montée sur l'embout.

Un exemple d'un tel outil est décrit dans le US-A-5 433 548. Il comporte toutefois une structure relativement complexe du fait de la nécessité de prévoir une pièce additionnelle dédiée au déverrouillage.

L'invention a pour but de fournir un outil particulièrement simple à réaliser, peu encombrant et robuste, qui permette un auto-encliquetage de l'élément rotatif sur l'embout et réduise fortement les risques de déverrouillage intempestif.

A cet effet, l'invention a pour objet un outil d'entraînement du type précité, caractérisé par la partie caractérisante de la revendication 1.

L'outil suivant l'invention (comme défini par la revendication 1) peut comporter une ou plusieurs des caractéristiques des revendications 2 à 20, prises isolément suivant toutes leurs combinaisons techniquement possibles.

Des exemples de réalisation de l'invention vont maintenant être décrits en regard des dessins annexés, sur lesquels les différentes Figures représentent en coupe longitudinale divers outils suivant l'invention. Plus particulièrement :
- la Figure 1 représente un cardan à rotule conforme à l'invention, en position de repos alignée;
- la Figure 2 représente le même cardan à rotule, en position brisée;
- la Figure 3 représente le cardan à rotule en position alignée et déverrouillée;
- la Figure 4 représente une variante du cardan à rotule des Figures 1 à 3;
- la Figure 5 représente l'application du cardan à rotule des Figures 1 à 4 à une poignée longue à cardan;
- la Figure 6 6 représente une poignée articulée suivant l'invention, en position droite;
- la Figure 7 représente la même poignée articulée, en position brisée;
- la Figure 8 représente un cardan à dé conforme à l'invention, en position de repos alignée;
- la Figure 9 représente une variante du cardan à rotule des Figures 1 à 3, en position de repos alignée;
- la Figure 10 est une vue analogue d'une autre variante du cardan à rotule;
- la Figure 11 représente une poignée coulissante conforme à l'invention;
- la Figure 12 représente une autre variante du cardan à rotule des Figures 1 à 3, en position de repos alignée;
- la Figure 13 représente un six-pans sphérique conforme à l'invention;
- la Figure 14 représente une variante de la Figure 10;
- la Figure 15 représente une rallonge à cardan à rotule suivant l'invention; et
- la Figure 16 représente une variante de la Figure 11.

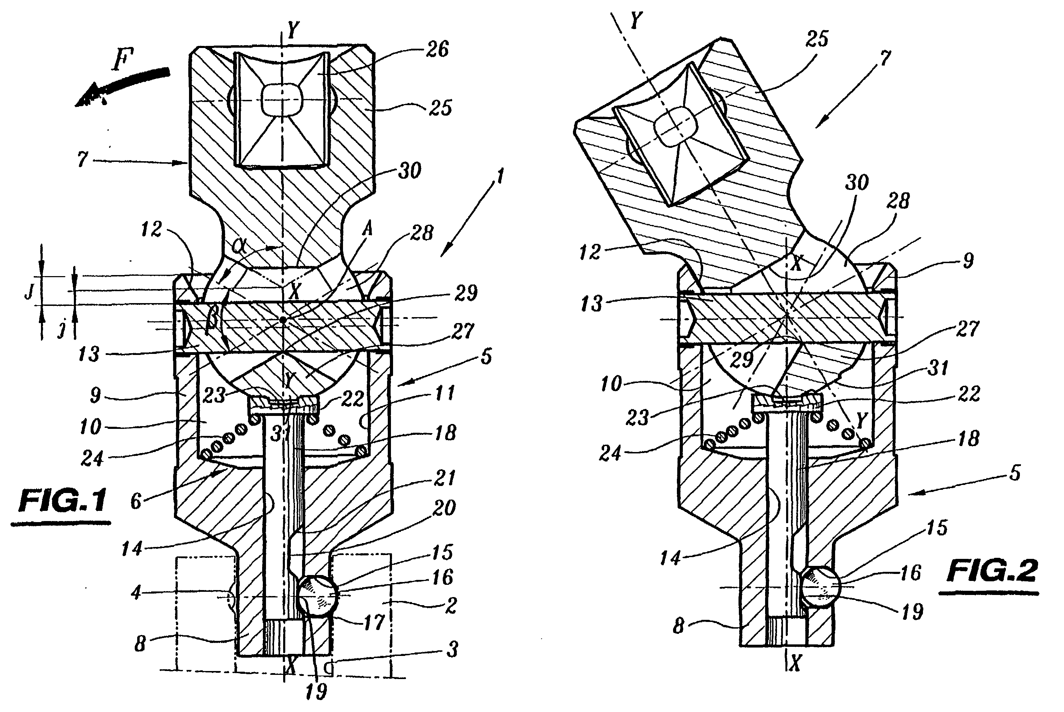

On a représenté sur les Figures 1 à 3 un cardan à rotule 1 destiné à entraîner en rotation une douille 2 schématisée en traits mixtes sur la Figure 1. L'extrémité distale (non visible sur le dessin) de la douille présente un profil d'entraînement tel qu'un six-pans femelle, destiné à venir en prise avec une tête de boulon en six-pans mâle conjugué. L'extrémité proximale de la douille comporte un profil femelle d'entraînement 3, par exemple un carré normalisé, dans chaque face duquel est prévu un évidement sphérique 4.

Le cardan à rotule 1 est essentiellement constitué de deux pièces principales, à savoir un embout 5 d'accouplement à la douille 2, muni d'un mécanisme 6 de verrouillage de la douille, et un organe principal 7 d'entraînement de l'embout.

Pour la commodité de la description, on supposera l'outil orienté comme sur la Figure 1, c'est-à-dire avec l'axe X-X de l'embout disposé verticalement et l'extrémité distale de l'embout dirigée vers le bas, et l'organe 7 situé au-dessus de l'embout.

La partie distale de l'embout 5 forme une tête d'accouplement 8 ayant un profil mâle conjugué du profil d'entraînement 3. L'embout se prolonge vers le haut par un corps d'entraînement 9 qui définit une cavité 10. La paroi latérale 11 de cette dernière est cylindrique à section circulaire. L'entrée de la cavité est chanfreinée en 12. Juste au-dessous de ce chanfrein, l'embout comporte une goupille d'articulation 13 à section circulaire, solidaire du corps 9, qui traverse diamétralement la cavité 10.

L'embout 5 comporte par ailleurs un conduit axial 14 qui débouche dans le fond de la cavité 10 et sur la tranche d'extrémité inférieure de l'embout, et un conduit radial 15 qui relie le conduit 14 à la surface périphérique de la tête 8. Une bille 16 est disposée librement dans le conduit 15, et est empêchée de s'en échapper vers l'extérieur par un matage 17 réalisé à la sortie de ce conduit. Ce dernier est placé en vis-à-vis de l'évidement sphérique 4 lorsque la douille 2 est en place.

De plus, une tige de commande 18 coulisse dans le conduit 14. Cette tige présente près de son extrémité inférieure un évidement latéral qui comporte une partie distale 19 relativement peu profonde, et une partie proximale 20 plus profonde. Chaque partie 19, 20 a un fond plat parallèle à l'axe X-X et est délimitée par deux surfaces telles que 21 inclinées par rapport à cet axe.

L'extrémité supérieure de la tige 18 forme une tête élargie 22. Au centre de la face supérieure de cette tête est prévu un évidement peu profond 23. Un ressort hélicoïdal conique 24 est comprimé entre la face inférieure de la tête 22 et le fond de la cavité 10.

L'organe principal d'entraînement 7, constitué dans ce mode de réalisation d'une seule pièce, comporte un corps supérieur 25 à profil d'entraînement femelle 26, qui est ici un carré normalisé identique à celui de la douille 2. Ce corps se prolonge vers le bas en une rotule sphérique 27. L'axe de l'organe 7 est désigné par Y-Y.

La rotule 27 est traversée par un conduit 28 obtenu en réalisant un alésage de même section que la goupille 13, dont l'axe rencontre en un point A l'axe Y-Y sous un angle α, et en faisant pivoter l'outil d'usinage sur un angle β = 180°- 2α, dans un plan diamétral de l'organe 7 qui est le plan de la Figure 1, autour du point A. Le conduit 28 a donc une largeur constante, égale au diamètre de la goupille 13, et s'ouvre des deux côtés suivant l'angle β. La région la plus étroite de ce conduit se trouve dans le plan diamétral de l'organe 7 perpendiculaire au plan de la Figure 1 et forme une ellipse 29 allongée suivant l'axe Y-Y.

Sur la Figure 1, on a indiqué en trait mixte, dans la partie supérieure du conduit 28, le contour obtenu de cette manière. Comme on le voit en trait plein en 30, on a de plus agrandi vers le haut la section du conduit 28, au moyen d'un usinage de même diamètre que précédemment mais orienté horizontalement.

Par ailleurs, l'extrémité distale de la rotule 27 porte un relief 31 centré sur l'axe Y-Y et conjugué de l'évidement 23 de la tige 18.

Dans la position de repos alignée de l'outil 1 (Figure 1), le relief 31 est reçu dans l'évidement 23. Cette position est stable, car le ressort 24 pousse la tige 18 vers le haut, ce qui amène le point bas de l'ellipse 29 au contact de la goupille 13.

Dans cette position, il existe au-dessus de la goupille 13, entre celle-ci et l'usinage 30, un jeu axial J, qui est nettement supérieur au jeu i qui résulterait du simple usinage d'angle β. Dans cet exemple, le rapport J/j est voisin de 2.

Dans la même position, le méplat inférieur 19 de la tige 18 se trouve en regard du conduit 15 de l'embout, ce qui verrouille la bille 16 en saillie par rapport à la tête d'accouplement 8 à l'intérieur de l'évidement sphérique 4 de la douille 2, rendant impossible le désaccouplement inopiné du cardan à rotule 1 d'avec la douille 2.

L'outil 1 peut être utilisé dans sa position de la Figure 1 pour transmettre un couple sans changement d'axe de l'organe 7 à l'embout 5, grâce à la coopération des flancs du conduit 28 et de la goupille 13 de l'embout.

La transmission de couple peut également s'effectuer avec un angle de brisure. Pour cela, il suffit d'exercer un effort de basculement, par exemple dans le plan de la Figure 1, suivant la flèche F. Dès que cet effort atteint une certaine valeur, le relief 31 repousse sur une faible distance la tige 18 en comprimant le ressort 24, ce qui lui permet de sortir de l'évidement 23. On arrive ainsi à la position de la Figure 2, avec une brisure maximale par rapport à l'axe X-X prédéterminée par la géométrie des pièces.

Au cours de ce mouvement et dans cette position, la bille 16 reste verrouillée en saillie par rapport à la tête d'accouplement 8 car le méplat 19 reste en regard du conduit 15 de l'embout 5. L'organe 7, par sa rotule 27,transmet comme précédemment le couple à l'autre organe principal de l'outil, constitué par l'embout 5 muni de sa goupille 13.

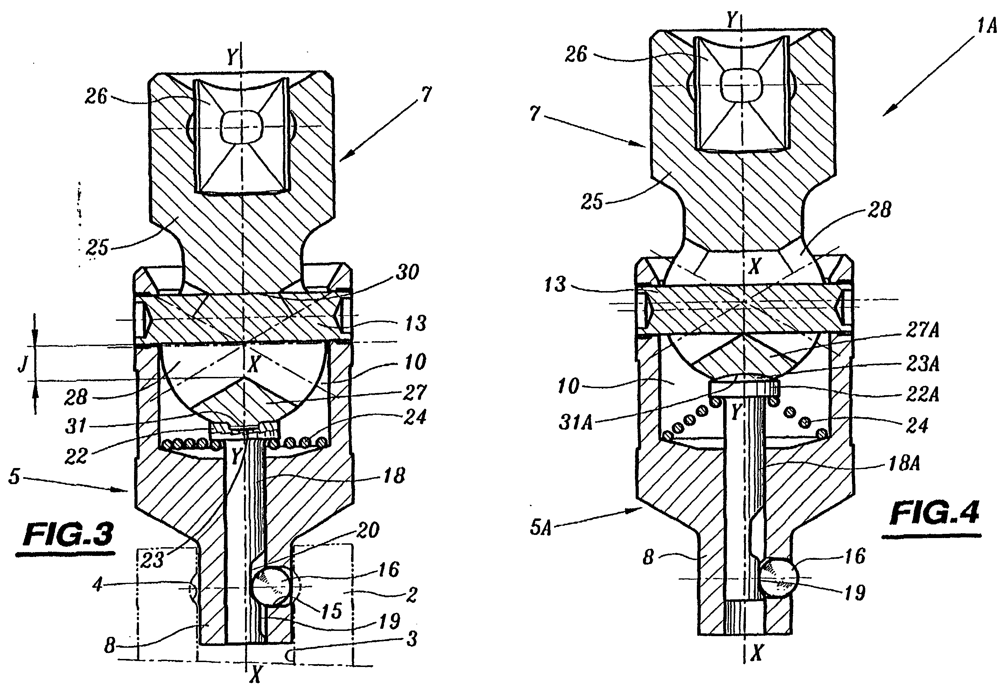

Pour déverrouiller la douille 2 afin de la retirer de l'embout 5, on ramène l'outil 7 dans l'axe de l'embout, et on le pousse vers le bas (Figure 3) de manière à amener l'usinage 30 au contact de la goupille 13. Ce déplacement axial d'amplitude J pousse vers le bas la tige 18, en comprimant le ressort 24, et amène le méplat supérieur 20 de cette tige au regard du conduit 15. La bille 16 est alors libre de s'escamoter entièrement dans la tête d'accouplement 8, ce qui libère la douille 2. Le retour en position verrouillée initiale s'effectue automatiquement, dès relâchement de la poussée, sous l'action du ressort 24.

On voit donc que ce déverrouillage s'obtient sans organe de déverrouillage supplémentaire, par simple déplacement axial relatif des organes principaux 5 et 7 de l'outil.

L'agencement ainsi décrit présente d'autres propriétés avantageuses.

D'une part, pour mettre en place la douille sur l'embout, il suffit, l'outil étant dans sa position alignée dans la Figure 1, d'emboîter l'extrémité proximale de la douille sur la tête 8 et de la pousser vers le haut en maintenant fixe l'organe principal 7 d'entraînement. La douille vient alors en butée contre la bille 16, qui est verrouillée, et repousse l'ensemble de l'embout vers le haut. Ceci comprime le ressort 24 et déplace la bille vers le haut le long de la tige 18, jusqu'à ce qu'elle se trouve en regard du méplat supérieur 20. Sous l'effet de la poussée exercée par la douille, la bille s'escamote alors dans le conduit 15, laissant la douille remonter sous l'effet de la poussée exercée par l'opérateur, et l'embout redescendre sous l'action du ressort 24, jusqu'à ce qu'un évidement 4 se trouve en regard du conduit 15. Lorsque l'opérateur relâche sa poussée, la douille 2 et l'embout 5 peuvent alors redescendre sous l'action du ressort 24 et la bille est de nouveau verrouillée. Il se produit ainsi un encliquetage automatique de la bille dans l'évidement 4 de la douille.

En revanche, le déverrouillage de la douille ne peut pratiquement pas s'effectuer intempestivement. En effet, il faut pour cela rapprocher les organes 5 et 7, en comprimant le ressort 24, pour libérer la bille, et tirer ensuite la douille vers le bas. Ces deux déplacements antagonistes nécessitent les deux mains de l'opérateur.

On comprend que le ressort 24 assure plusieurs fonctions différentes :
- d'une part, en position alignée de l'outil, il rattrape le jeu axial J entre les organes principaux 5 et 7;
- d'autre part, il rappelle en permanence la tige 18 en position de verrouillage;
- il permet d'obtenir l'encliquetage 23-31, libérable par simple brisure volontaire de l'outil. Cet encliquetage permet de maintenir provisoirement la douille 2, verrouillée sur l'embout comme représenté à la Figure 1, dans l'axe de l'organe 7, et donc d'approcher facilement cette douille d'une tête six-pans à manoeuvrer, même dans des emplacements peu accessibles;
- enfin, il procure, par friction, un effet de frein en position brisée.

Dans les variantes décrites ci-dessous, les éléments identiques conservent les mêmes références numériques, tandis qu'un suffixe A, B,... est ajouté pour les éléments correspondants mais modifiés.

La variante 1A de la Figure 4 ne diffère de la précédente que par la forme des reliefs d'encliquetage : la tête de tige 22A présente une surface supérieure 23A qui est sphérique et convexe et qui coopère avec une surface sphérique concave conjuguée 31A prévue à l'extrémité distale de la rotule 27A.

En variante, les reliefs d'encliquetage 23, 31 ou 23A, 31A peuvent être remplacés par des petits aimants disposés à l'extrémité de la rotule et sur la tête de la tige.

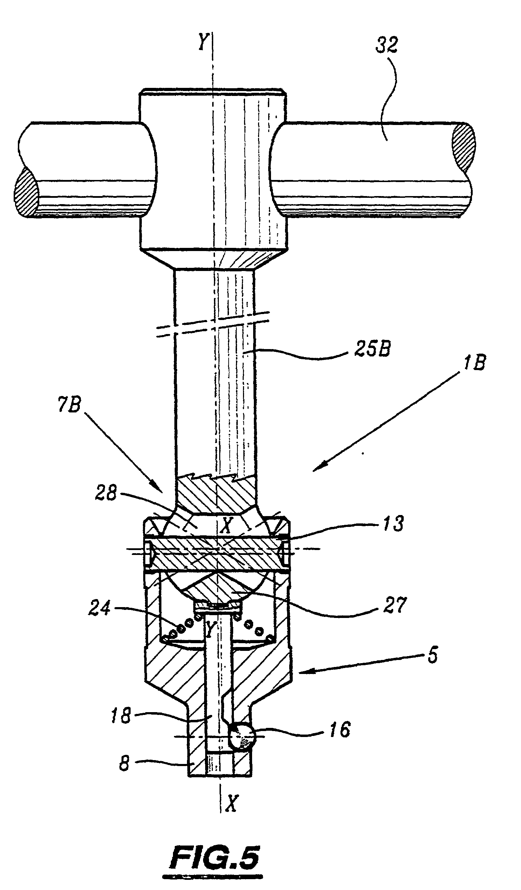

La Figure 5 représente un outil 1B qui ne diffère de celui des Figures 1 à 3 que par le fait que le corps 25B de l'organe 7B forme une barre d'axe Y-Y qui porte à son extrémité proximale une poignée radiale fixe ou coulissante 32 d'entraînement en rotation. L'outil 1B constitue donc une poignée longue à cardan.

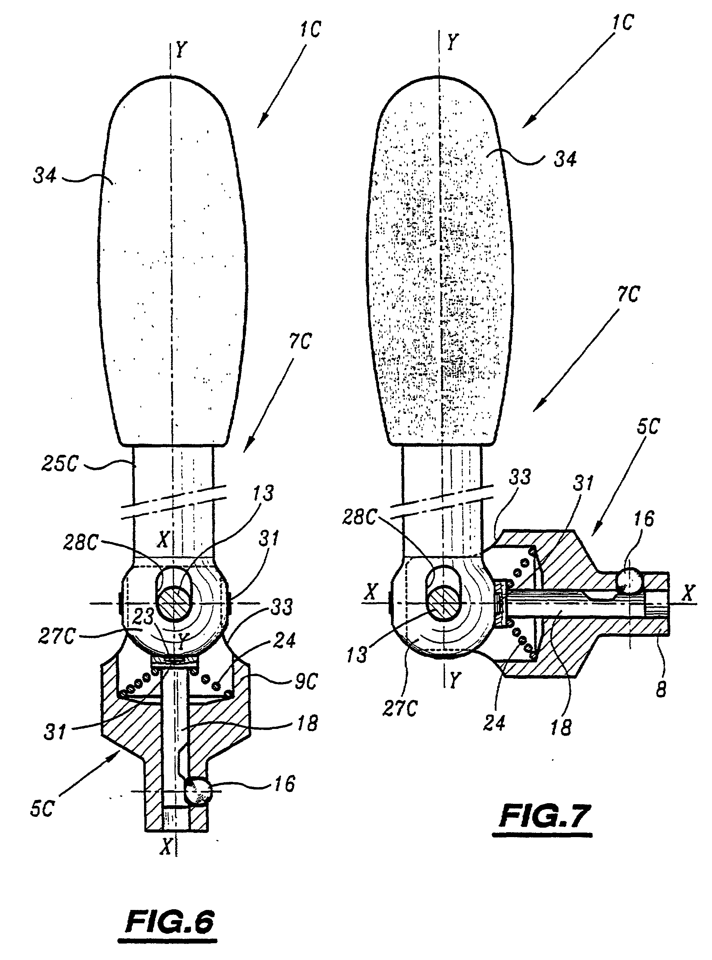

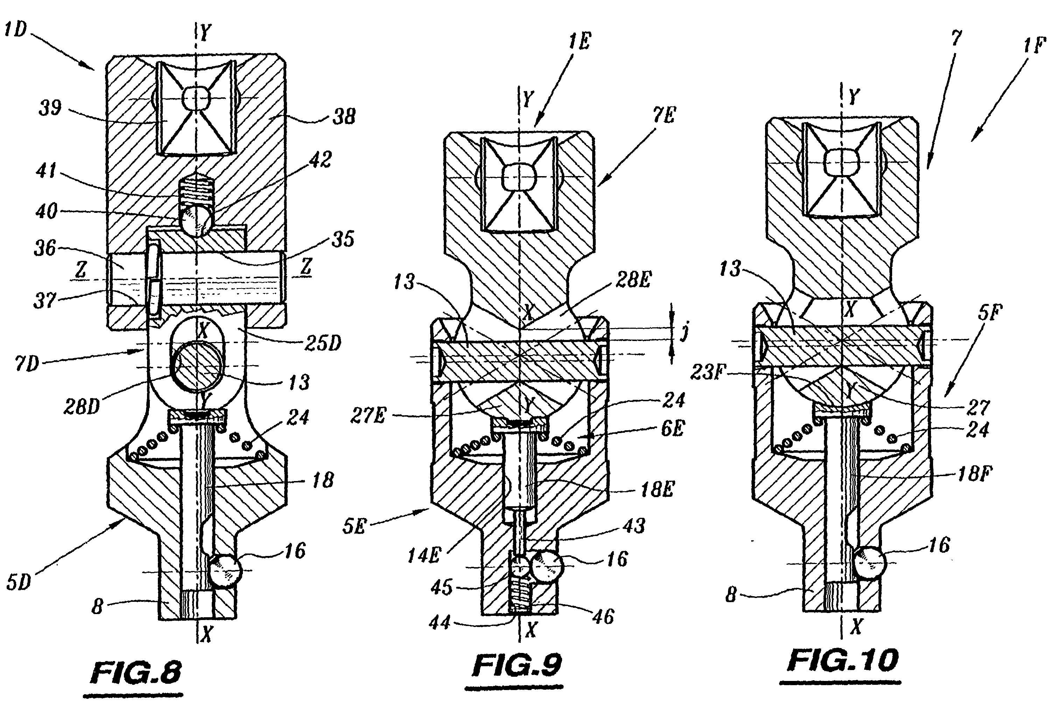

Les Figures 6 et 7 illustrent l'application de l'invention à une poignée articulée simple 1C. Dans ce cas, le corps 9C de l'embout 5C est largement ajouré en 33 de part et d'autre de la goupille 13, à partir de son extrémité proximale, et le conduit 28C de la rotule 27C est un conduit d'axe parallèle à cette goupille et ayant une section oblongue suivant l'axe Y-Y et de même largeur que la goupille. De plus, la rotule comporte deux reliefs 31 supplémentaires, situés à 90° de part et d'autre du relief 31 d'extrémité distale, et le corps 25C de l'organe 7C porte une poignée droite 34. Les autres éléments de l'outil sont identiques aux éléments correspondants des Figures 1 à 3.

La position de repos alignée est représentée sur la Figure 6. Le relief d'extrémité 31 coopère avec l'évidement 23 de la tige 18, et le ressort 24 maintient celle-ci en position de verrouillage de la bille 16 et la goupille 13 en appui sur l'extrémité distale du canal 28C. Le déverrouillage s'effectue par simple poussée vers le bas de la poignée 34.

Pour exercer des couples de vissage/dévissage élevés, on peut briser l'outil, en libérant comme précédemment l'encliquetage 23-31. En particulier, on peut le briser à 90° pour lui faire prendre l'une ou l'autre des positions stables définies par les deux autres reliefs 31 de la rotule, comme représenté sur la Figure 7.

Le mode de réalisation 1D de la Figure 8 diffère du précédent par le fait que le corps 25D de l'organe 7D constitue un dé de cardan. Ce dé comporte, à son extrémité proximale, un autre conduit 35 d'axe Z-Z perpendiculaire au conduit 28D, qui confère au cardan sa seconde articulation autour de l'axe Z-Z par l'intermédiaire d'une seconde goupille 36. Les extrémités de cette dernière sont reçues dans des alésages 37 d'une chape qui fait partie d'un second corps d'entraînement 38, lequel est pourvu d'une empreinte femelle 39 identique à l'empreinte 26 de la Figure 1, destinée à recevoir le couple moteur.

La position alignée stable de l'ensemble est obtenue grâce à un second encliquetage d'une bille auxiliaire 40 chargée par un ressort 41 et coopérant avec un évidement sphérique 42 prévu à l'extrémité proximale du dé 25D.

Le mode de réalisation 1E de la Figure 9 diffère de celui des Figures 1 à 3 sous deux aspects.

D'une part, le mécanisme de verrouillage est du type à deux billes : la tige 18E a sur toute sa longueur une section circulaire, avec une partie inférieure 43 de plus petite diamètre guidée dans une partie inférieure 44 de diamètre correspondant du conduit 14E. Une bille auxiliaire 45, plus petite que la bille 16 mais de plus grand diamètre que la partie 44, est disposée dans un tronçon d'extrémité contre-alésé de la partie 44 et est maintenue contre la tranche d'extrémité de la tige par un ressort faible 46.

D'autre part, l'usinage 30 des Figures 1 à 3 est supprimé, de sorte que le jeu axial entre les deux organes principaux 5E-13 et 7E est le jeu i précité.

Avec un tel mécanisme de verrouillage à deux billes, le jeu i est suffisant pour déverrouiller la bille 16 de la même manière que précédemment.

La Figure 10 représente une variante 1F des Figures 1 à 3, qui n'en diffère que par la suppression des reliefs d'encliquetage 23-31. Ainsi, la tête de la tige de verrouillage 18F comporte une surface supérieure sphérique concave 23F conjuguée de la rotule 27.

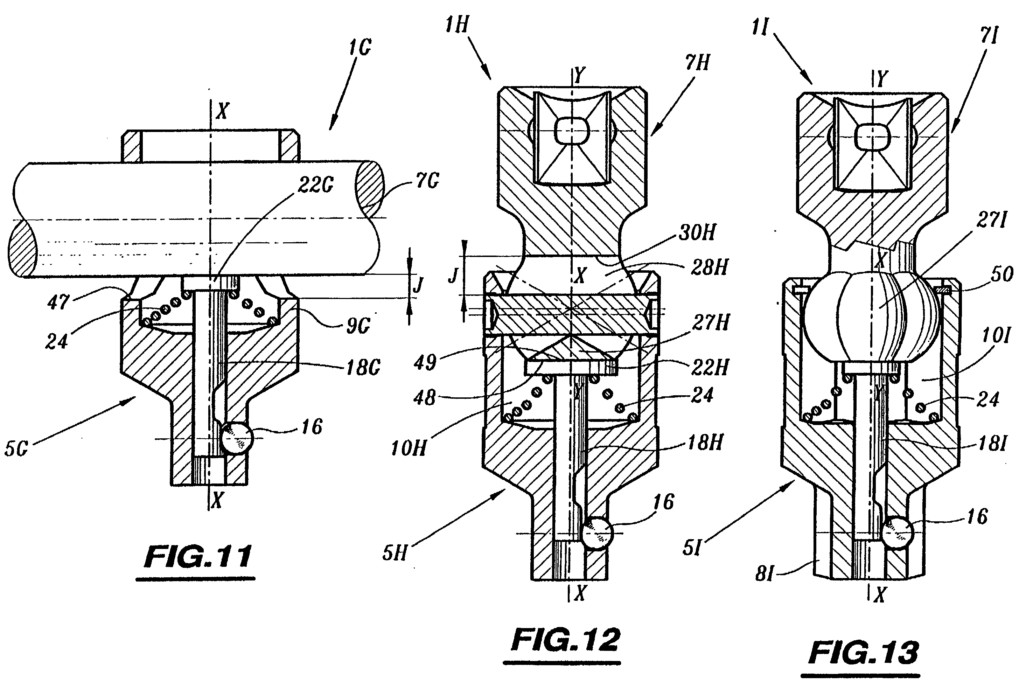

Dans le mode de réalisation 1G de la Figure 11, il n'est pas non plus prévu d'encliquetage. La tête de tige 22G est extérieurement plane, ou bien cylindrique et concave, et coopère avec une barre coulissante cylindrique 7G perpendiculaire à l'axe X-X, qui traverse deux lumières 47 en vis-à-vis du corps 9G de l'embout 5G. Ces lumières ont comme largeur le diamètre de la barre 7G, et elles sont allongées dans le sens vertical. La barre 7G forme ainsi l'organe principal d'entraînement de l'outil et possède le jeu vertical J qui lui permet de déverrouiller la bille 16 lorsque l'embout d'accouplement est déplacé vers ladite barre.

Le mode de réalisation 1H de la Figure 12 ne diffère de celui des Figures 1 à 3 que par le fait que l'extrémité distale 48 de la rotule 27H est plane et horizontale et s'étend sur toute la surface permise par le conduit 28H. Il est à noter que, dans cette version, le jeu J a encore été agrandi par arasage 30H de la partie supérieure du conduit 28H. De plus, la tête 22H de la tige 18H comporte une surface supérieure 49 plane et de même aire que la surface 48.

De cette manière, quelle que soit la brisure du cardan à rotule, le ressort 24 tend en permanence à aligner les axes X-X et Y-Y.

Le même effet de redressement est obtenu dans le cas de l'outil 1I de la Figure 13, où la cavité 10I est un six-pans femelle et la rotule 27I est un six-pans sphérique retenu par un circlips 50 prévu à l'entrée de la cavité 10I.

Il est à noter que, dans cette version, l'embout 5I a un profil extérieur 81 à quatre lobes tels que décrit dans le WO-A-96/25 603 au nom de la Demanderesse.

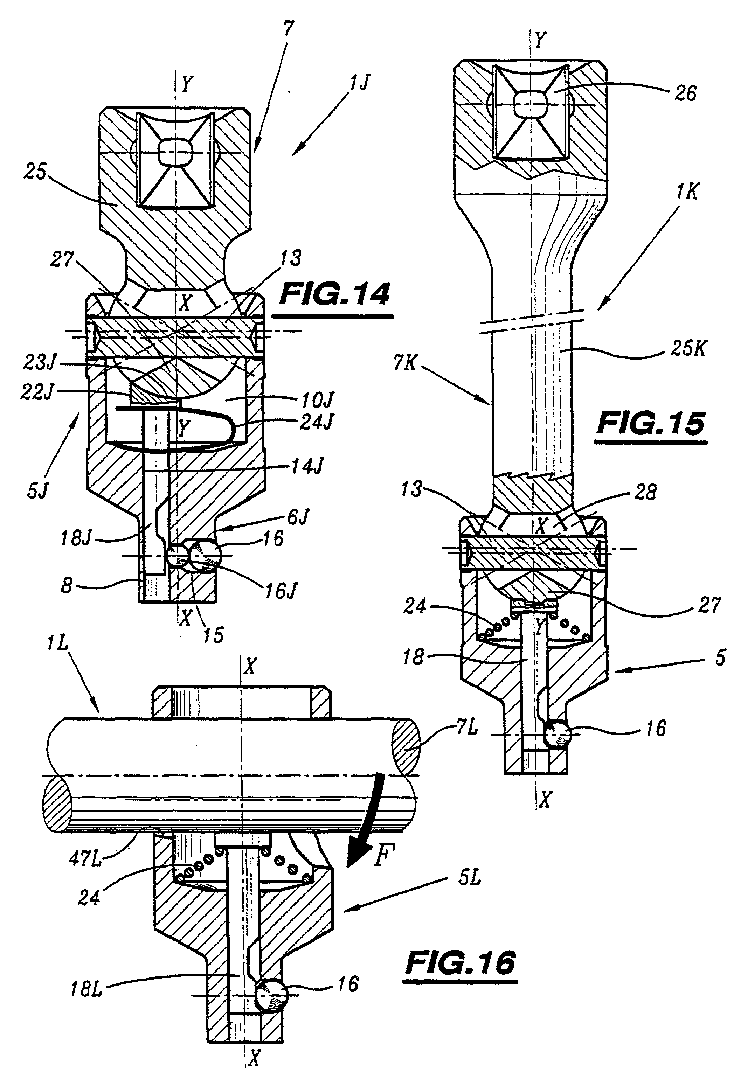

La variante 1J de la Figure 14 diffère de celle de la Figure 10 par les points suivants :
- d'une part, le conduit 14J de l'embout est parallèle à l'axe X-X mais décalé par rapport à cet axe. Un tel décalage peut être envisagé jusqu'à l'affleurement de la tige 18J à la surface du profil d'entraînement 8. Pour compenser ce décalage, une seconde bille 16J, de plus petit diamètre que la bille 16, est interposé entre celle-ci et la tige 18J pour compléter les moyens de verrouillage 6J;
- de façon corrélative, la tête 22J de la tige a une forme modifiée de manière que sa surface supérieure 23J reste conjuguée de la rotule 27;
- par ailleurs, le ressort 24J est un ressort en épingle à cheveux comprimé entre la tête 22J et le fond de la cavité 10J.

La variante 1K de la Figure 15 ne diffère de celle des Figures 1 à 3 que par l'allongement du corps 25K de l'organe 7K, à partir de la rotule 27, sous la forme d'une barre dont la longueur est supérieure à trois fois son diamètre courant. L'outil constitue ainsi une rallonge à cardan à rotule.

La variante 1L de la Figure 16 diffère de celle de la Figure 11 par le fait qu'une des lumières de l'embout (la lumière 47L de gauche sur le dessin) a une forme qui entoure la barre coulissante 7L avec un jeu faible. Ce jeu est juste suffisant pour permettre à la barre 7L d'effectuer un débattement angulaire dans la lumière 47L lorsque l'opérateur appuie sur la partie de la barre opposée à cette lumière, comme indiqué par la flèche F. Ce mouvement, comme précédemment, déplace vers le bas la tige 18L et déverrouille la bille 16.

## Revendications

1. Outil (1;...;1L) d'entraînement d'un élément rotatif, du type comprenant deux organes principaux, à savoir :
- un embout (5;...;5L) d'accouplement avec l'élément rotatif (2), cet embout étant muni de moyens (6; 6E; 6J)) de verrouillage de l'accouplement qui sont déverrouillables et normalement verrouillés; et
- un organe principal (7;...;7L) d'entraînement en rotation de l'embout;
**caractérisé en ce que** :
- il existe entre l'embout (5;...;5L) et l'organe principal d'entraînement (7;...;7L) une liberté (J, j) permettant un déplacement relatif ayant une composante suivant l'axe (X-X) de l'embout, et
- l'organe principal d'entraînement (7;...;7L) est adapté pour déverrouiller les moyens de verrouillage (6; 6E; 6J) sous le simple effet dudit déplacement relatif de cet organe principal d'entraînement par rapport à l'embout (5;...;5L) vers l'extrémité distale de ce dernier.

2. Outil (1;...;1K) suivant la revendication 1, **caractérisé en ce que** ledit déplacement relatif est une translation suivant l'axe (X-X) de l'embout.

3. Outil (1;...;1L) suivant la revendication 1 ou 2, **caractérisé en ce qu'**il comprend en outre un moyen de sollicitation, notamment un ressort (24; 24J), qui tend à éloigner l'organe principal d'entraînement (7;...;7L) de l'extrémité distale de l'embout (5;...;5L).

4. Outil (1;...;1L) suivant la revendication 3, **caractérisé en ce que** le moyen de sollicitation (24; 24J) tend à appliquer l'organe principal d'entraînement (7;...;7L) contre une butée (13) solidaire de l'embout (5;...;5L).

5. Outil (1;...;1L) suivant la revendication 3 ou 4, **caractérisé en ce que** le moyen de sollicitation (24; 24J) sollicite les moyens de verrouillage (6; 6E; 6J) vers leur position de verrouillage.

6. Outil (1;...;1L) suivant l'une quelconque des revendications 1 à 5, **caractérisé en ce que** les moyens de verrouillage (6; 6E; 6J) comprennent :
- un verrou (16), notamment une bille, disposé dans un conduit (15) de l'embout (5;...;5L) qui débouche sur la surface périphérique de cet embout; et
- une tige de verrouillage (18;...;18L) montée coulissante dans un second conduit (14; 14E; 14J) essentiellement parallèle à l'axe (X-X) de l'embout, et notamment coaxiale à cet embout, entre une position de verrouillage, dans laquelle elle maintient le verrou (16) en saillie au-delà de la surface périphérique de l'embout, et une position de déverrouillage, dans laquelle elle permet au verrou de s'escamoter dans le perçage (15),
et **en ce que** la tige de verrouillage (18;...;18L) comporte une tête (22;...;22J) qui coopère avec l'organe principal d'entraînement (7;...;7L) lors dudit déplacement relatif.

7. Outil (1;...;1L) suivant l'une quelconque des revendications 1 à 6, **caractérisé en ce qu'**il comporte une articulation dans laquelle l'organe principal d'entraînement (7;...;7L) est articulé autour d'une goupille (13) solidaire de l'un (5;...;5L) des deux organes principaux (5;...;5L, 7;...;7L) et traversant au moins une lumière (28; 28C; 28D) de l'autre organe principal (7,...;7L) qui est allongée parallèlement à l'axe (Y-Y) de ce dernier.

8. Outil (1;...;1E) suivant les revendications 6 et 7 prises ensemble, **caractérisé en ce que** la tête (22; 22A) de la tige de verrouillage (18; 18A) et l'extrémité distale de l'organe principal d'entraînement (7; 7A) comportent des moyens conjugués de positionnement (23, 31; 23A, 31A) adaptés pour coopérer dans au moins une position angulaire prédéterminée de l'organe principal d'entraînement par rapport à l'embout (5; 5A), notamment lorsque cet organe et cet embout sont alignés.

9. Outil (1;...;1E) suivant la revendication 8, **caractérisé en ce que** les moyens de positionnement (23, 31; 23A, 31A) sont des formes mâles et femelles adaptées pour s'encliqueter mutuellement, ou des aimants.

10. Outil (1H; 1I) suivant la revendication 7 ou 8, **caractérisé en ce qu'**il comprend des moyens élastiques de redressement (24) qui tendent à maintenir parallèles ou confondus les axes (X-X, Y-Y) de l'organe principal d'entraînement (7H; 7I) et de l'embout (5H; 5I).

11. Outil (1H; 1I)suivant la revendication 10 prise ensemble avec la revendication 4 ou 5, **caractérisé en ce que** les moyens élastiques de redressement sont constitués par ledit moyen de sollicitation (24).

12. Outil (1H; 1I) suivant les revendications 6 et 11 prises ensemble, **caractérisé en ce que** la tête (22H; 22I) de la tige de verrouillage (18H; 18I) et l'extrémité distale de l'organe principal d'entraînement (7H; 7I) comportent des méplats (48, 49) appliqués l'un sur l'autre lorsque l'organe principal d'entraînement est aligné avec l'embout (5H; 5I).

13. Outil (1E) suivant l'une quelconque des revendications 7 à 12, **caractérisé en ce que** ladite articulation forme un cardan à rotule, le jeu (j) d'usinage de la lumière (28E) de la rotule (27E) définissant ladite liberté de déplacement relatif.

14. Outil (1; 1A; 1B; 1E; 1F; 1H) suivant l'une quelconque des revendications 7 à 12, **caractérisé en ce que** ladite articulation forme un cardan à rotule, le jeu d'usinage de la lumière (28) de la rotule (27) étant augmenté pour définir ladite liberté de déplacement relatif (J).

15. Outil (1C) suivant l'une quelconque des revendications 7 à 12, **caractérisé en ce que** ladite articulation est une articulation simple d'une poignée articulée (34).

16. Outil (1D) suivant l'une quelconque des revendications 7 à 12, **caractérisé en ce que** ladite articulation est une articulation simple d'un cardan à dé(25D).

17. Outil (1I) suivant l'une quelconque des revendications 7 à 12, **caractérisé en ce que** ladite articulation est un polygone rotulant, notamment un six-pans sphérique (27I).

18. Outil (1G) suivant l'une quelconque des revendications 1 à 6, **caractérisé en ce que** l'organe principal d'entraînement (7G) est une barre perpendiculaire à l'axe (X-X) de l'embout (5G), montée coulissante d'une part suivant son propre axe et d'autre part suivant l'axe (X-X) de l'embout, dans au moins une lumière (47) de l'embout qui est allongée parallèlement à l'axe de ce dernier.

19. Outil (1L) suivant l'une quelconque des revendications 1 à 6, **caractérisé en ce que** l'organe principal d'entraînement (7L) est une barre perpendiculaire à l'axe (X-X) de l'embout (5L), montée coulissante suivant son propre axe à travers deux lumières de l'embout dont l'une (47L) est allongée parallèlement à l'axe de ce dernier.

20. Outil (1K) suivant l'une quelconque des revendications 1 à 14, 16 et 17, **caractérisé en ce que** l'organe principal d'entraînement (7K) possède un corps (25K) qui forme une barre-rallonge dont la longueur est supérieure à trois fois son diamètre courant.

## Claims

1. Tool (1;...;1L) for driving a rotary element, of the type comprising two main members, namely:
- an end piece (5; ... ; 5L) for coupling to the rotary element (2), this end piece being provided with means (6; 6E; 6J) for locking the coupling which are releasable and normally locked; and
- a main member (7;...; 7L) for rotationally driving the end piece;
**characterised in that**:
- between the end piece (5;...;5L) and the main drive member (7;...;7L) there is a clearance (J, j) which allows relative movement having a component along the axis (X-X) of the end piece, and
- the main drive member (7;...;7L) is adapted to unlock the locking means (6; 6E; 6J) simply by the action of said relative movement of said main drive member relative to the end piece (5;...;5L) towards the distal end of the latter.

2. Tool (1;..,;1K) according to claim 1, **characterised in that** said relative movement is a movement of translation along the axis (X-X) of the end piece.

3. Tool (1;...;1L) according to claim 1 or 2, **characterised in that** it further comprises biasing means, notably a spring (24; 24J), which tends to move said main drive member (7;...;7L) away from the distal end of the end piece (5;...;5L).

4. Tool (1;...;1L) according to claim 3, **characterised in that** the biasing means (24; 24J) tend to press the main drive member (7;...;7L) against an abutment (13) which is integral with the end piece (5,...;5L).

5. Tool (1;...;1L) according to claim 3 or 4,
**characterised in that** the biasing means (24; 24J) urge the locking means (6; 6E; 6J) towards their locking position.

6. Tool (1;...;1L) according to any one of claims 1 to 5, **characterised in that** the locking means (6; 6E; 6J) comprise:
- a lock (16), notably a ball, disposed in a conduit (15) of the end piece (5;...;5L) which opens on to the peripheral surface of this end piece; and
- a locking rod (18;...;18L) slidably mounted in a second conduit (14; 14E; 14J) substantially parallel to the axis (X-X) of the end piece, and in particular parallel to this end piece, between a locking position, in which it holds the lock (16) projecting beyond the peripheral surface of the end piece, and a release position in which it allows the lock to swivel into the bore (15),
and **in that** the locking rod (18;...18L) comprises a head (22;...;22J) which co-operates with the main drive member (7;...;7L) during said relative displacement.

7. Tool (1;...;1L) according to any one of claims 1 to 6, **characterised in that** it comprises a joint wherein the main drive member (7;...;7L) is articulated about a pin (13) integral with one (5;...;5L) of the two main members (5;...;5L, 7;...;7L) and passing through at least one opening (28; 28C; 28D) in the other main member (7;...;7L) which is elongated parallel to the axis (Y-Y) of the latter.

8. Tool (1;...;1E) according to claims 6 and 7 taken together, **characterised in that** the head (22; 22A) of the locking rod (18; 18A) and the distal end of the main drive member (7;7A) comprise conjugated positioning means (23; 31; 23A, 31A) adapted to co-operate in at least one predetermined angular position of the main drive member relative to the end piece (5; 5A), notably when this member and this end piece are aligned.

9. Tool (1;...;1E) according to claim 8, **characterised in that** the positioning means (23; 31; 23A, 31A) are male and female forms adapted to latch together, or magnets.

10. Tool (1H; 1I) according to claim 7 or 8, **characterised in that** it comprises resilient straightening means (24) which tend to keep the axes (X-x, Y-Y) of the main drive member (7H; 7I) and of the end piece (5H; 5I) parallel or coincident.

11. Tool (1H; 1I) according to claim 10 taken together with claim 4 or 5, **characterised in that** the resilient straightening means consist of said biasing meane (24).

12. Tool (1H; 1I) according to claims 6 and 11 taken together, **characterised in that** the head (22H; 22I) of the locking rod (18H; 18I) and the distal end of the main drive member (7H; 7I) comprise flattened portions (48, 49) applied to one another when the main drive member is aligned with the end piece (5H; 5I).

13. Tool (1E) according to any one of claims 7 to 12, **characterised in that** said joint forms a ball joint, the machining play (j) of the opening (28E) of the ball joint (27E) defining said clearance for relative movement.

14. Tool (1; 1A; 1B; 1E; 1F; 1H) according to any one of claims 7 to 12, **characterised in that** said joint forms a ball joint, the machining play of the opening (28) of the ball joint (27) being increased in order to define said clearance for relative movement (J).

15. Tool (1C) according to any one of claims 7 to 12, **characterised in that** said joint is a simple articulation of an articulated handle (34).

16. Tool (1D) according to any one of claims 7 to 12, **characterised in that** said joint is a simple articulation of a cube joint (25D).

17. Tool (1I) according to any one of claims 7 to 12, **characterised in that** said joint is a swivelling polygon, notably a spherical six-sided shape (27I).

18. Tool (1G) according to any one of claims 1 to 6, **characterised in that** the main drive member (7G) is a bar perpendicular to the axis (X-X) of the end piece (5G) mounted so as to slide on the one hand along its own axis and on the other hand along the axis (X-X) of the end piece, in at least one opening (47) of the end piece which is elongated parallel.to the axis of the latter.

19. Tool (1L) according to any one of claims 1 to 6, **characterised in that** the main drive member (7L) is a bar perpendicular to the axis (X-X) of the end piece (5L) mounted so as to slide along its own axis through two openings in the end piece, at least one (47L) of which is elongated parallel to the axis of the latter.

20. Tool (1K) according to any one of claims 1 to 14, 16 and 17, **characterised in that** the main drive member (7K) has a body (25K) which forms an extension bar the length of which is more than three times its running diameter.

## Patentansprüche

1. Werkzeug (1;...;1L) zum Antrieb eines Drehelements, aufweisend zwei Hauptorgane, nämlich:
- einen Ansatz (5;...;5L) zur Kopplung mit dem Drehelement (2), wobei dieser Ansatz mit Mitteln (6; 6E; 6J) zur Verriegelung der Kopplung versehen sind, die entriegelbar und normalerweise verriegelt sind; und
- ein Hauptdrehantriebsorgan (7;...;7L) zum Drehantrieb des Ansatzes, **dadurch gekennzeichnet, dass**:
- zwischen dem Ansatz (5;...;5L) und dem Antriebshauptorgan (7;...;7L) ein Spielraum (J, j) vorhanden ist, der eine Relativverschiebung zulässt, die eine Komponente entlang der Achse (X-X) des Ansatzes aufweist, und
- das Hauptantriebsorgan (7;...;7L) dazu ausgelegt ist, die Verriegelungsmittel (6; 6E; 6J) unter der einfachen Einwirkung der Relativverschiebung dieses Hauptantriebsorgans relativ zu dem Ansatz (5;...;5L) in Richtung zum distalen Ende dieses Ansatzes zu entriegeln.

2. Werkzeug (1;...;1K) nach Anspruch 1, **dadurch gekennzeichnet, dass** die Relativverschiebung eine Translation entlang der Achse (X-X) des Ansatzes ist.

3. Werkzeug (1;...;1L) nach Anspruch 1 oder 2, **dadurch gekennzeichnet, dass** es außerdem ein Vorspannmittel, insbesondere eine Feder (24; 24J) umfasst, das dazu dient, das Hauptantriebsorgan (7;...;7L) vom distalen Ende des Ansatzes (5;...;5L) abzurücken.

4. Werkzeug (1;...;1L) nach Anspruch 3, **dadurch gekennzeichnet, dass** das Vorspannmittel (24; 24J) dazu dient, das Hauptantriebsorgan (7;...;7L) gegen einen Anschlag (13) anzulegen, der mit dem Ansatz (5;...;5L) fest verbunden ist.

5. Werkzeug (1;...;1L) nach Anspruch 3 oder 4, **dadurch gekennzeichnet, dass** das Vorspannmittel (24, 24J) die Verriegelungsmittel (6; 6E; 6J) in Richtung ihrer Verriegelungsposition vorspannt.

6. Werkzeug (1;...;1L) nach einem der Ansprüche 1 bis 5, **dadurch gekennzeichnet, dass** die Verriegelungsmittel (6; 6E, 6J) aufweisen:
- einen Riegel (16), insbesondere eine Kugel, der in einem Kanal (15) des Ansatzes (5;...; 5L) angeordnet ist, welcher auf die Umfangsfläche dieses Ansatzes ausmündet; und
- eine Verriegelungsstange (18;...;18L), die gleitend in einem zweiten Kanal (14; 14E; 14J) angebracht ist, der im wesentlichen parallel zu der Achse (X-X) des Ansatzes verläuft und insbesondere koaxial zu diesem Ansatz, zwischen einer Verriegelungsposition, in welcher sie den Riegel (16) über die Umfangsfläche des Ansatzes vorspringend hält und einer Entriegelungsposition, in welcher sie dem Riegel erlaubt, in die Bohrung (15) vorzustehen, und
dass die Verriegelungsstange (18;...;18L) einen Kopf (22;...;22J) umfasst, der mit dem Hauptantriebsorgan (7;...;7L) bei dessen Relativverschiebung zusammenwirkt.

7. Werkzeug (1;...;1L) nach einem der Ansprüche 1 bis 6, **dadurch gekennzeichnet, dass** es ein Gelenk umfasst, in welchem das Hauptantriebsorgan (7;...;7L) um einen Stift (13) angelenkt ist, der mit dem einem (5;...;5L) der zwei Hauptorgane (5;...;5L, 7;...;7L) fest verbunden ist und zumindest einen Durchbruch (28, 28C, 28D) des anderen Hauptorgans (7;...;7L) durchsetzt, der parallel zur Achse (Y-Y) des zuletzt genannten Organs sich erstreckt.

8. Werkzeug (1;...;1E) nach Anspruch 6 in Verbindung mit Anspruch 7, **dadurch gekennzeichnet, dass** der Kopf (22, 22A) der Verriegelungsstange (18, 18A) und das distale Ende des Hauptantriebsorgans (7; 7A) gekoppelte Positionierungsmittel (23, 31; 23A, 31A) umfasst, die dazu ausgelegt sind, zumindest in einer vorbestimmten Winkelposition des Hauptantriebsorgans relativ zu dem Ansatz (5; 5A) insbesondere dann zusammenzuwirken, wenn dieses Organ und dieser Ansatz fluchten.

9. Werkzeug (1;...;1E) nach Anspruch 8, **dadurch gekennzeichnet, dass** die Positionierungsmittel (23, 31; 23A, 31A) eindringende und eindringbare Formen aufweisen, die dazu ausgelegt sind, sich gegenseitig zu sperren, oder dass sie Magnete sind.

10. Werkzeug (1H; 1I) nach Anspruch 7 oder 8, **dadurch gekennzeichnet, dass** es elastische Ausrichtungsmittel (24) umfasst, die dazu dienen, die Achsen (X-X, Y-Y) des Hauptantriebsorgans (7H; 7I) und des Ansatzes (5H; 5I) parallel oder in Einstimmung zu halten.

11. Werkzeug (1H; 1I) nach Anspruch 10, in Verbindung mit Anspruch 4 oder 5, **dadurch gekennzeichnet, dass** die elastischen Ausrichtungsmittel durch das Vorspannmittel (24) gebildet sind.

12. Werkzeug (1H; 1I) nach Anspruch 6 in Verbindung mit Anspruch 11, **dadurch gekennzeichnet, dass** der Kopf (22H; 22I) der Verriegelungsstange (18H; 18I) und das distale Ende des Hauptantriebsorgans (7H; 7I) Abflachungen (48, 49) aufweisen, die in Anlage aneinander gelangen, wenn das Hauptantriebsorgan mit dem Ansatz (5H; 5I) fluchtet.

13. Werkzeug (1E) nach einem der Ansprüche 7 bis 12, **dadurch gekennzeichnet, dass** das Gelenk einen Kugelgelenkkardanantrieb bildet, wobei das Bearbeitungsspiel (J) für den Durchbruch (28E) des Kugelgelenks (27E) den Relativverschiebungsspielraum bildet.

14. Werkzeug (1; 1A; 1B; lE; 1F; 1H) nach einem der Ansprüche 7 bis 12, **dadurch gekennzeichnet, dass** das.Kugelgelenk einen Kugelkardanantrieb bildet, wobei das Bearbeitungsspiel für den Durchbruch (28) des Kugelgelenks (27) vergrößert ist, um den Relativverschiebungsspielraum (J) festzulegen.

15. Werkzeug (1C) nach einem der Ansprüche 7 bis 12, **dadurch gekennzeichnet, dass** das Gelenk ein einfaches Gelenk in Gestalt eines Griffgelenks (34) ist.

16. Werkzeug (1D) nach einem der Ansprüche 7 bis 12, **dadurch gekennzeichnet, dass** das Gelenk ein einfaches Gelenk in Gestalt eines Vierkantkardangelenks (25D) ist.

17. Werkzeug (1I) nach einem der Ansprüche 7 bis 12, **dadurch. gekennzeichnet, dass** das Gelenk ein Vieleckkugelgelenk ist, insbesondere ein Kugelsechsflach (27I).

18. Werkzeug (1G) nach einem der Ansprüche 1 bis 6, **dadurch gekennzeichnet, dass** das Hauptantriebsorgan (7G) eine Stange senkrecht zur Achse (X-X) des Ansatzes (5G) ist, die einerseits gleitend entlang ihrer eigenen Achse und andererseits entlang der Achse (X-X) des Ansatzes in zumindest einem Durchbruch (47) des Ansatzes angebracht ist, der parallel zur Achse dieses Ansatzes verläuft.

19. Werkzeug (1L) nach einem der Ansprüche 1 bis 6, **dadurch gekennzeichnet, dass** das Antriebshauptorgan (7L) eine Stange senkrecht zur Achse (X-X) des Ansatzes (5L) ist, die gleitend entlang ihrer eigenen Achse quer zu zwei Durchbrüchen des Ansatzes angebracht ist, von denen einer (47L) parallel zur Achse des Ansatzes verläuft.

20. Werkzeug (1K) nach einem der Ansprüche 1 bis 14, 16 und 17, **dadurch gekennzeichnet, dass** das Antriebshauptorgan (7K) einen Körper (25K) besitzt, der eine Verlängerungsstange bildet, deren Länge größer als das Dreifache ihres regulären Durchmessers ist.
